# EUROPEAN PATENT SPECIFICATION

(11) **EP 1 456 967 B1**
(45) Date of publication and mention of the grant of the patent: **02.04.2008**
(21) Application number: 02788361.0
(22) Date of filing: 16.12.2002
(51) Int. Cl.: H04B 7/005, H04Q 7/38

(54) **WIRELESS COMMUNICATION DEVICE AND METHOD FOR COMMUNICATING IN SITE SELECTION DIVERSITY MODE**
DRAHTLOSE KOMMUNIKATIONSVORRICHTUNG UND VERFAHREN ZUR KOMMUNIKATION IM STANDORTWAHLDIVERSITÄTSMODUS
DISPOSITIF DE COMMUNICATION SANS FIL ET PROCEDE PERMETTANT DE COMMUNIQUER EN MODE A DIVERSITE DE SELECTION D'EMPLACEMENT

(30) Priority: 17.12.2001 US 21541
(43) Date of publication of application: 15.09.2004
(73) Proprietor: Marvell D.S.P.C. Ltd., 49527 Pethach Tikva (IL)
(72) Inventor: SMOLYAR, Lev, 32887 Haifa (IL); BERGEL, Itzhak, Givat-Shmuel (IL)
(74) Representative: Dunlop, Hugh Christopher
(86) International application number: PCT/IB2002/005410
(87) International publication number: WO 2003/052967

(56) References cited:
- EP-A- 1 109 330
- WO-A-01/01602
- WO-A-01/24568
- US-A- 6 167 282

## Description

### Technical Field

The present invention pertains to wireless communications, and in some embodiments, to CDMA communications, and other embodiments, to wireless communication devices operating in site selection diversity transmit (SSDT) mode.

### Cross-Reference to Related Applications

This application claims priority under 35 U.S.C. § 120 to related copending U. S. Patent Application entitled "METHOD AND APPARATUS FOR GENERATING A QUALITY MEASURE TARGET VALUE BASED ON CHANNEL CONDITIONS", filed December 17, 2001, having application serial number 10/021,541 and having Attorney docket number 884.654us1, which is assigned to the same assignee as the present application.

### Background

Code division multiple access (CDMA) is a technique for spread-spectrum digital communications used for many applications, including, for example, mobile communications. In CDMA systems, data signals are combined with a spreading waveform to form a coded signal for transmission. At the receiver, the received signal is combined with a similar spreading waveform to extract the data signals. The technique provides high data capacity by spreading signal energy over a wide bandwidth to increase bandwidth utilization and reduce the effects of narrow band interference. Multipath effects make synchronization more difficult since the wireless channel from a base station to a reception device may have several paths of different time-delays, which may vary due to the movement of the reception device.

Wireless communication devices (e.g., mobile stations), which communicate CDMA signals with remote base stations, often operate in a site selection diversity transmit (SSDT) mode for selection of base stations to communicate with. One problem with SSDT mode is that some algorithms, such as signal to interference ratio (SIR) estimation and frequency estimation algorithms, are unable to quickly adapt to the quick changes in channel conditions that occur when transferring communications from one base station to another. This may result in poor performance, especially after the selection of a new primary base station for communication.

One specific problem area is power control. Mobile stations conventionally implement power control methods to minimize transmission power while maintaining desired performance levels. Conventional power control methods implement a nested loop structure having an outer loop and an inner loop to control transmit power. In the outer loop, the block error rate (BLER) of received data may be monitored and compared to a desired BLER. A SIR target is then developed for the receiver based on the comparison. In the inner loop, a measured SIR for a received signal is compared to the SIR target A power control message may then be generated for delivery to the transmitter based on the result of the SIR comparison (e.g., indicating whether transmit power modifications are desirable). A problem with this power control technique (and other similar methods) is that the BLER measurement is relatively slow and, therefore, the SIR target is not able to adapt quickly to changes in channel conditions. As may be appreciated, this may result in poor communication quality when channel conditions change faster than transmit power may be readjusted.

From US-A-6167282, it is known for subscriber units (e.g. mobile radios) to maintain rankings for various sites (base stations) in order to de-affiliate with a current site and affiliate with another site. Such site rankings are used to compare the relative "quality" of service provided by various sites. Thus, each subscriber unit continuously maintains and assesses site rankings in order to select the best possible site with which to affiliate. A variety of factors is measured and/or tracked in order to determine each site ranking maintained by a subscriber unit. Examples of such factors include: received signal strength at the subscriber unit for outbound transmissions from a given site; whether the subscriber unit has ever been denied access to the given site; whether a given site is geographically adjacent to a subscriber unit's current site; and the bit error rate at the subscriber unit for outbound transmissions from the given site.

WO 01/01602 A describes a wireless telecommunications system in which mobile station power control is affected by a functional combination of signal-to-interference sampling, bit error rate sampling, and frame error rate sampling.

### Brief Description of the Drawing

The detailed description presents a more complete understanding of the present invention when considered in connection with the figures, wherein like reference numbers refer to similar items throughout the figures and:
FIG. 1 illustrates an operational environment in which embodiments of the present invention may be practiced;
FIG. 2 is a block diagram of a wireless communication device in accordance with an embodiment of the present invention;
FIG. 3 is a block diagram of a SIR target generator in accordance with an embodiment of the present invention;
FIG. 4 is a block diagram of a carrier frequency correction unit in accordance with an embodiment of the present invention;
FIG: 5 is a flow chart of a communication procedure in accordance with an embodiment of the present invention;
FIG. 6 is a flow chart of a procedure for managing SIR targets in accordance with an embodiment of the present invention; and
FIG. 7 is an illustration of SIR target management in accordance with an embodiment of the present invention.

### Detailed Description

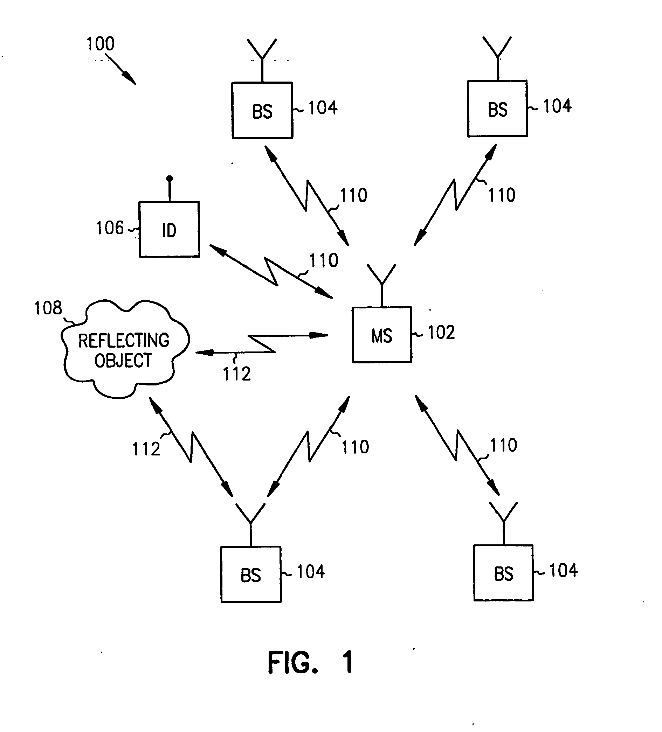

The following description and the drawings illustrate specific embodiments of the invention sufficiently to enable those skilled in the art to practice it. Other embodiments may incorporate structural, logical, electrical, process, and other changes. Examples merely typify possible variations. Individual components and functions are optional unless explicitly required, and the sequence of operations may vary. Portions and features of some embodiments may be included in or substituted for those of others. The present invention pertains to wireless communications, and in some embodiments, to code division multiple access (CDMA) communications, and other embodiments, to wireless communication devices operating in site selection diversity transmit (SSDT) mode. The present invention also pertains to wideband CDMA (WCDMA) communications. FIG. 1 illustrates an operational environment in which embodiments of the present invention may be practiced. Operational environment 100 includes mobile station 102 which may communicate with one or more base stations 104 over communication channels 110. Mobile station 102 may be implemented as any form of communication device or subsystem that may be used within a wireless communication system including, for example, a handheld communicator, a cellular base station transceiver, a satellite uplink, downlink, or crosslink transceiver, a transceiver within a terrestrial wireless link, a local multipoint distribution system (LMDS) or multipoint multichannel distribution system (MMDS) transceiver, a two-way radio, transceivers within wireless local area networks (LANs), metropolitan area networks (many), wide area networks (WANs), wireless local loop transceivers, and others.

Operational environment 100 may also include one or more reflecting objects 108, which may cause multipath reflections and frequency selective fading within the spectrum utilized by base stations 104 and mobile station 102. Operational environment 100 may also include one or more in-band interfering devices (ID) 106 which generate interference within the spectrum utilized by base stations 104 and mobile station 102. Due to reflecting objects 108 and interfering devices 106, base stations 104 and mobile station 102 may experience channel fading, multipath components, and interference conditions unique to a particular communication path between a base station and a mobile station. Communication channels 110 may be any form of wireless communication path, and may include, for example, CDMA and wide-band CDMA (WCDMA) communication channels.

In accordance with embodiments of the present invention, mobile station 102 receives CDMA signals and communicates with remote base stations 104 in site selection diversity transmit (SSDT) mode. During communications with a primary base station, communication state parameters, such as signal to interference ratio (SIR) targets, may be maintained for base stations of an active set of base stations. The communication state parameters may be used for transferring communications to one of the base stations of the active set. In one embodiment, the communication state parameters may be used for the selection of a base station from the active set. In another embodiment, the communication state parameters of the selected base station may be used for power control immediately after transferring communications. In yet another embodiment, the communication state parameters may include SIR targets and/or carrier frequency estimates, which may be maintained for base stations of the active set during communications with the primary base station. In this embodiment, when transferring communications to a selected base station of the active set, the SIR target and/or carrier frequency correction for the selected base station may be used immediately after transferring communications.

In an alternate embodiment, communication state parameters for the base stations of the active set may be calculated when this station is selected for communication. When a base station is selected for transferring communications, the communication state parameters for the selected base station may be updated for subsequent use after transferring communications.

The active set of base stations may include any base station that may be considered by a mobile station for transferring communications. The active set of base stations may include any base station of the system from which the mobile station may be capable of communicating with. The base stations of the active set may be determined from power level measurements of associated pilot channels. In accordance with one embodiment of the present invention, a base station of the active set may be selected for transferring communications based on channel state parameters. This is unlike conventional systems, which select base stations for transferring communications solely based on power level measurements.

Accordingly, improved wireless communications may be achieved. A base station having better error performance may be selected for transferring communications because maintained SIR targets and/or carrier frequency estimates may be used for base station selection. Improved communications may be achieved more quickly after transferring communications by use of the SIR target maintained for the selected base station. Furthermore, improved communications may be achieved more quickly after transferring communications because carrier frequency offset may be quickly corrected thereafter. Furthermore, a more accurate power control message based on the maintained SIR measurements may be quickly generated after transferring communications to a selected base station.

In one embodiment, SIR target approximations may be based on channel conditions, including a number of signal paths and/or speed of the mobile station. In one embodiment, a primary base station may be chosen based at least on signal to noise ratios (SNRs) of the base stations. In one embodiment, a plurality of SIR targets may be maintained (e.g., one target for each of the base stations of the primary set). In an alternate embodiment, a SIR target for a particular base station may be updated when the base station is the primary base station and held constant for base stations that are not the primary base station. The SIR targets may be determined by using one or more channels, such as the dedicated physical data channel (DPDCH), the dedicated physical control channel (DPCCH) and/or a common pilot channel (CPICH) of a WCDMA system. Alternatively, the SIR target for non-primary base stations may be updated using at least in part, a channel such as the DPCCH channel that may be constantly transmitted by the particular base station.

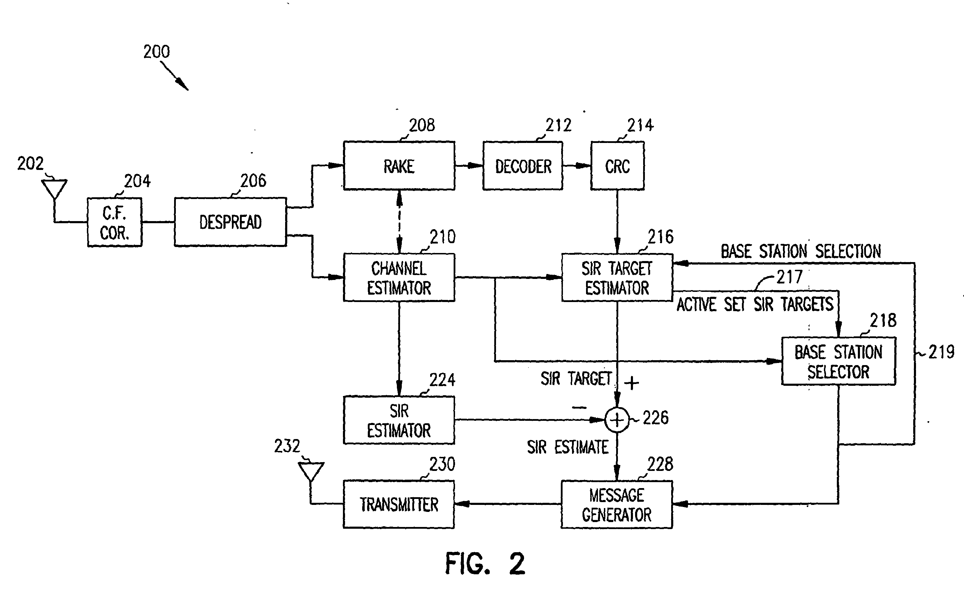

FIG. 2 is a block diagram of a wireless communication device (WCD) in accordance with an embodiment of the present invention. WCD 200 may be suitable for use as mobile station 102 (FIG. 1) although other devices are also suitable. WCD 200 may be used within a communication system implementing various communication techniques, including code division multiple access (CDMA) techniques as well as wide-band CDMA (WCDMA). WCD 200 may be implemented as either a mobile communicator or a base station transceiver within a communication system. When WCD 200 is implemented as a mobile communicator, receive antenna 202 may receive spread spectrum CDMA signals from one or more remote base stations. Despreader 206 despreads one or more of the signals using CDMA despreading techniques. Rake receiver 208 isolates various multipath components associated with a particular base station and may combine the components coherently. Decoder 212 decodes the resulting signal. Cyclic redundancy check (CRC) element 214 may use decoded signal information from decoder 212 to detect and quantify errors (e.g., as percentage of CRC errors) within WCD 200. Channel estimator 210 may processes the despread information to estimate channel parameters for the corresponding channel. SIR estimator 224 may estimate a SIR of the received signal using channel parameters determined by channel estimator 210. Any technique, including conventional techniques, for estimating a SIR from channel estimates may be suitable.

SIR target generator 216 generates a SIR target based on channel estimates from channel estimator 210 and performance estimates from CRC element 214. Embodiments of the present invention may use any conventional SIR target generation technique. At least one embodiment of the present invention may use the SIR target generation approach described in U. S. Patent Application entitled "METHOD AND APPARATUS FOR GENERATING A QUALITY MEASURE TARGET VALUE BASED ON CHANNEL CONDITIONS", filed December 17, 2001, having application serial number 10/021,541 and publication number US 2003 114179, which is assigned to the same assignee as the present application. In accordance with embodiments of the present invention, SIR target generator 216 may also generate active set SIR targets 217 from channel estimates. Active set SIR targets 217 may represent instantaneous SIR targets for base stations of the active set. This is described in more detail below.

The SIR target generated by SIR target generator 216 may be compared with the SIR estimate provided by SIR estimator 224 in comparison unit 226. Message generator 228 may then generate a message, including a power control message, based upon the comparison results. The message may be transmitted to a remote base station using transmitter 230 and transmit antenna 232. A similar approach may be used when WCD 200 is implemented as a base station, although receive antenna 202 may receive CDMA signals from one or more remote users rather than one or more remote base stations. Receive and transmit antennas 202, 232 may be replaced by a single antenna with the addition of duplexing functionality. Receive and transmit antennas 202, 232 may be almost any type of antenna suitable for receiving and transmitting frequencies used by WCD 200. In one embodiment, receive and transmit antennas 202, 232 may be comprised of either a single or separate dipole antennas, although other types of antennas are also suitable.

In at least one embodiment of the present invention, SIR targets generated for base stations of the active set are used to support a site selection diversity transmit (SSDT) mode of operation. In this mode, a mobile station may select one of a number of different base stations to transmit to the mobile station at a particular time. For example, when the channel from one base station is fading, a mobile station operating in SSDT mode may switch to another base station whose channel may not be fading. During the transition (i.e., transferring communications) from one base station to another, the channel conditions of the new base station may often be significantly different from the channel conditions of the previous base station. If the SIR target of the previous base station were used for receipt of communications from the new base station, a relatively large SIR target error could result. In accordance with embodiments of the present invention, a relatively quick adjustment of the SIR target may be made for communications with the new base station. In one embodiment, a mobile station maintains SIR targets for each candidate base station during normal operation. Thus, an approximate SIR target for a new base station may be available for use at the time the new base station is selected.

In the past, mobile stations operating in SSDT mode would typically select a base station based on the total power received from each candidate base. However, the performance of a receiver (e.g., BLER, etc.) may not be a function of receive power alone, but may also be a function of other channel parameters. Disregarding this fact may result in a transition to a base station that has a higher received power, but may result in a lower performance level. Therefore, in at least one embodiment of the invention, a mobile station uses SIR targets that are calculated using estimated channel parameters as part of a base station selection criterion in SSDT mode.

CRC unit 214 may estimate almost any type of performance information that may be useful for generating the SIR target for the primary base station by target generator 216. This may include, for example, block error rate, bit error rate, symbol error rate, and other performance measures. Channel estimator 210 may estimate almost any form of channel information that may be used by SIR target generator 216 to determine SIR targets. This may include, for example, the number of paths in the channel, the path strengths, mobile velocity, path fading rates, symbol energy variances, variances between symbols of different blocks, variance of total block energy, and/or others. In addition to the channel parameters used by SIR target generator 216, channel estimator 210 may also estimate almost any other channel parameters that may be required by SIR estimator 224 or other functions within WCD 200.

WCD 200 may also include base station selector 218 which may select a base station for transferring communications as part of SSDT mode operations. Base station selector 218 may receive active set SIR targets 217 generated by SIR target generator 216 and/or channel estimates provided by channel estimator 210. Base station selector 218 may provide base station selection signal 219 for use by SIR target generator 216, an embodiment of which is described in more detail below. Base station selector 218 may also provide base station selection signal 219 to carrier frequency correction unit 204. Base station selector 218 may also provide a signal to message generator 228 for use in indicating the selected base station to a system controller.

Although WCD 200 is illustrated as having several separate elements, one or more of the elements may be combined and may be implemented by combinations of software-configured elements, such as processors including digital signal processors (DSPs), and/or other hardware elements. Unless specifically stated otherwise, terms such as processing, computing, calculating, determining, displaying, or the like, may refer to an action and/or process of one or more processing or computing systems or similar devices that may manipulate and transform data represented as physical (e.g., electronic) quantities within a processing system's registers and memory into other data similarly represented as physical quantities within the processing system's registers or memories, or other such information storage, transmission or display devices.

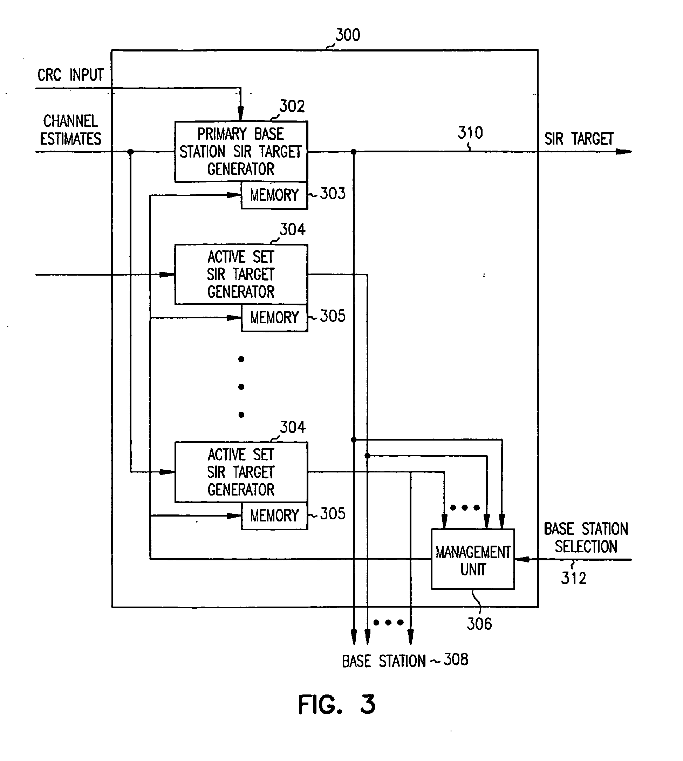

FIG. 3 is a block diagram of a SIR target generator in accordance with an embodiment of the present invention. SIR target generator 300 may be suitable for use as SIR target generator 216 (FIG. 2) although other devices may also be suitable. SIR target generator 300 includes primary base station SIR target generator 302 to generate SIR target value 310 during communications with a primary base station. SIR target generator 300 may also include one or more active set SIR target generators 304 to generate one of the active set SIR targets 308 for one or more base stations when the WCD is communicating with the primary base station. SIR target generators 302 and 304 may receive channel estimates from a channel estimator such as channel estimator 210 (FIG. 2), and in one embodiment, the channel estimator may provide channel estimates for more than one channel. For example, the channel estimator may provide channel estimates for a current channel with the primary base station, as well as channel estimates for channels with other base stations of the active set. In this embodiment, channel estimator 210 (FIG. 2) may include more than one functional channel estimator unit.

In one embodiment, a single one of active set SIR target generator 304 may be used. In this embodiment, the single active set SIR target generator 304 may generate SIR targets for the various base stations of the active set in a serial fashion. In an alternate embodiment, one active set SIR target generator 304 may be employed for each base station (or a predetermined number of base stations) of the active set in which SIR targets are to be generated.

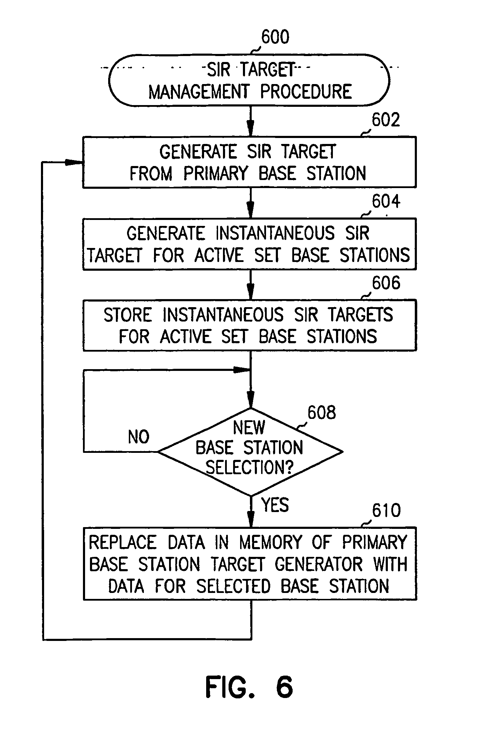

SIR target generator 300 may include management unit 306, which receives base station selection signal 312. Base station selection signal 312 may be provided by base station selector 218 (FIG. 2). In one embodiment, when a base station is selected for transferring communications, management unit 306 as SIR target value 310 provides the SIR target for the selected base station. The operation of SIR target generator for managing and using SIR targets is described in more detail below (e.g. see FIG. 6).

In one embodiment, active set SIR targets 308 generated by SIR target generators 304 may be used to select a base station for transferring communications. In this embodiment, base station selector 218 (FIG. 2) may receive active set SIR targets 308 from one or more of SIR target generators 304 and may select a base station for transferring communications using a selection criteria that considers the SIR for the candidate base station.

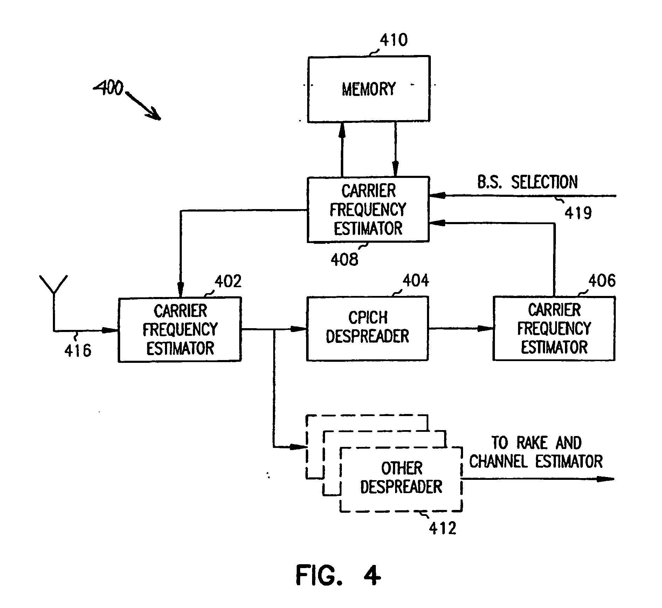

FIG. 4 is a block diagram of a carrier frequency correction unit in accordance with an embodiment of the present invention. Carrier frequency correction unit 400 may be suitable for use as carrier frequency correction unit 204 (FIG. 2) although other units may also be suitable. Carrier frequency correction unit 400 provides a correction to a carrier frequency by measuring the carrier frequency in carrier frequency measuring element 406 using an output of channel despreader 404. In one embodiment, channel despreader 404 may despread a pilot channel, such as a CPICH channel of a CDMA system, although other channels may be suitable for carrier frequency measurements. A carrier frequency estimation is generated by element 408 and may be stored in memory 410. In one embodiment, carrier frequencies are estimated for base stations of an active set of base stations. In this embodiment, despreader 404 may despread pilot channels for the base stations in a serial or sequential fashion allowing a carrier frequency estimation for base stations in an active set to be stored in memory 410. In this embodiment, when a base station from the active set is selected for transferring communications, a carrier frequency correction for the selected base station is immediately available allowing for correction of any carrier frequency offset. Accordingly, improved communications may be achieved substantially immediately after transferring communications. As illustrated in FIG. 4, other despreaders 412 correspond with despreader 206 (FIG. 2) and are not necessarily part of carrier frequency correction unit 400. Antenna 416 may correspond with antenna 202 (FIG. 2) and is also not necessarily part of carrier frequency correction unit 400. In one embodiment, base station selection signal 419 may be received by unit 400 from base station selector 218 (FIG. 2) to select a carrier frequency correction for a selected base station.

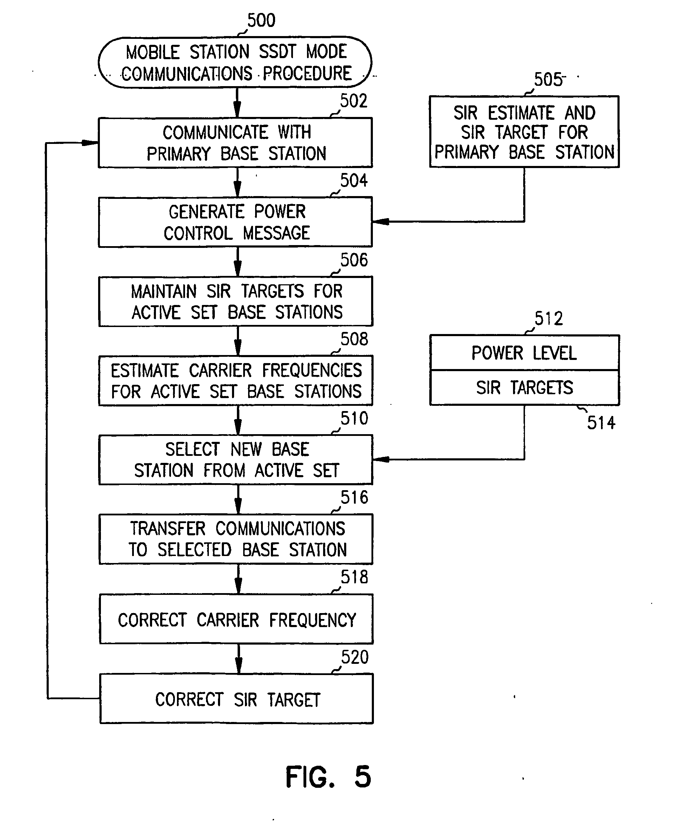

FIG. 5 is a flow chart of a communication procedure in accordance with an embodiment of the present invention. Communication procedure 500 may be performed by a wireless communication device, such as WCD 200 (FIG. 2), as part of communication with base stations in an SSDT mode. Communication procedure 500 may also be performed by a wireless communication device, such as WCD 200 (FIG. 2), as part of selecting a base station for transferring communications. Although the individual operations of procedure 500 are illustrated and described as separate operations, one or more of the individual operations may be performed concurrently and nothing requires that the operations be performed in the order illustrated. The various operations of procedure 500 may be implemented by elements of WCD 200 as well as by processing elements and memory not separately illustrated that may be configured with software and/or firmware.

In operation 502, a WCD communicates with a primary base station. The WCD may communicate using CDMA techniques or may communicate in accordance with other conventional communication techniques. In operation 504, a power control message is generated. In one embodiment, the power control message is based on SIR estimate and SIR target 505 for the primary base station. The power control message may be generated in accordance with techniques discussed above for generating power control messages by WCD 200 (FIG. 2).

In operation 506, during communications with the primary base station of the active set, the WCD may maintain signal to interference ratio (SIR) target values for at least some base stations of the active set. The SIR targets may be generated by SIR target generator 300 (FIG. 3) and may correspond with active set SIR targets 308 (FIG. 3). In operation 508, carrier frequency estimates may be generated and maintained for at least some base stations of the active set during communications with a primary base station. These carrier frequency estimates may be stored in a memory and may be generated by a carrier frequency estimator such carrier frequency correction unit 400 (FIG. 4).

In operation 510, a base station is selected for transferring communications from the active set of base stations. Operation 510 may use power level measurements 512 of channels from the base stations, SNR measurements, and/or may use active set SIR targets 514 generated in operation 506. Operation 510 may be performed by a base station selection element, such as base station selector 218 (FIG. 2) and may be performed as part of SSDT mode operations. Operation 510 may include generating a base station selection signal, such as signal 219 (FIG. 2).

In operation 516, communications are transferred to the selected base station. In one embodiment, the SIR target fro the selected base station may be used. After transferring communications to a new base station, the carrier frequency may be corrected in operation 518 using the carrier frequency estimations generated in operation 508. In operation 520, the SIR target may be corrected. After transferring communications to the new base station, the WCD may communicate with the new primary base station and operations 502 through 520 may be repeated. In one embodiment, a power control message may be based on the SIR target maintained for the selected base station allowing a more accurate power control message to be sent shortly after transferring communications without having to wait for error information to be generated.

FIG. 6 is a flow chart of a procedure for managing SIR targets in accordance with an embodiment of the present invention. Procedure 600 may be performed by SIR target generator 300 (FIG. 3) although other devices may also be suitable for performing procedure 600. Procedure 600 may be performed as an alternative to some of the operations of procedure 500 (FIG. 5) in which SIR targets may be continually updated for all base stations of the active set. An embodiment in which procedure 600 is performed by SIR target generator 300 is described. In operation 602, primary base station SIR target generator 302 generates a SIR target. The SIR target may be generated using any SIR target generation technique and may use a CRC input from CRC 214 (FIG. 2) and a channel estimate from channel estimator 210 (FIG. 2). As part of operation 602, primary base station SIR target generator 302 may produce SIR target output 310 for use in device 200 (FIG. 2) as previously discussed. In operation 604, primary base station SIR target generator 302 may generate an instantaneous SIR target, and in operation 606, primary base station SIR target generator 302 may use memory 303 to store the instantaneous SIR target. In operation 608, a base station selection input 312 may be received from base station selector 218 (FIG. 2). The base station selection input may identify a base station from the active set which is to become the new primary base station.

When no base station selection input is received is operation 608, management unit 306 may wait until a base selection input is received. During this time, SIR target output may still be generated by the primary base station SIR target generator 302 as part of the normal operations of wireless communication device 200 (FIG 2). It should be noted that in this embodiment, operation 610 is not performed until a new base station is selected.

In operation 610, management unit 306 may replace the memory contents of memory 303 with communication state parameters for the selected base station. The memory contents may include an instantaneous SIR target and/or channel estimates. Operation 610 may be performed in many ways.

In one embodiment, for example, management unit 306 may take the old primary base station communication state parameters (e.g., from memory 303) and store the parameters in a memory (e.g., one of memories 305) for the selected active base station. Management unit 306 may also take the communication state parameters relevant for the new selected base station (e.g., from one of memories 305), and may store the communication state parameters in memory 303 for use by primary base station SIR target generator 302. In this way, primary base station SIR target generator 302 now may work with the communication state parameters for the new base station.

In another embodiment, management unit 306 may perform an update of the data from the active set memory once, before putting the communication state parameters in the primary base station SIR target generator's memory (e.g., memory 303). This update may be done to reflect the passing of time since the data's last update. This update may also be done to reflect whatever information was available for the management unit at the prior time, for example channel estimates, old primary base SIR target, etc.).

Upon the completion of operation 610, the operations of procedure 600 may be repeated. During the repetition of procedure 600, the selected base station from the active set is now the primary base station (e.g., in operation 602), and the formerly primary base station may now be one of the base stations of the active set (e.g., for operations 604 and 606).

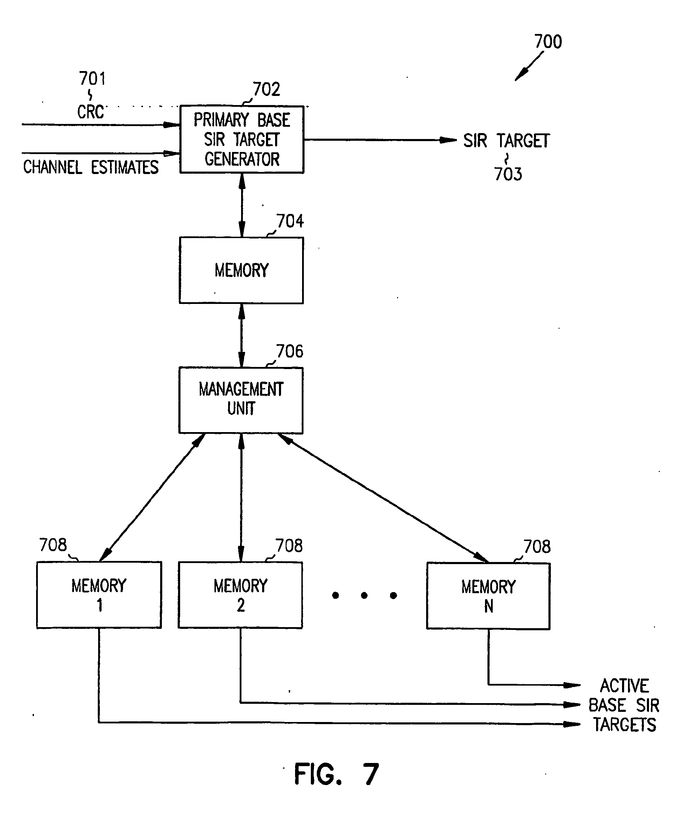

FIG. 7 is an illustration of SIR target management in accordance with an embodiment of the present invention. SIR target management 700 may be performed by the various elements of SIR target generator 300 (FIG. 3) used in a wireless communication device, such as device 200 (FIG. 2). Primary base SIR target generator 702 may use any conventional SIR target generation method to generate SIR target 703. Primary base SIR target generator 702 may use, for example, CRC and channel estimates 701. Primary base SIR target generator 702 may also use memory 704 to store the instantaneous SIR target. Each time a new primary base station is selected, management unit 706 may replace the contents of the active memory with data for selected base station data. This may be done, for example, in one of two ways. In one embodiment, management unit 706 may simply take the old primary base station data (e.g., from memory 704) and may store it in the active base stations memory (e.g., one of memories 708), and may take the data that is relevant for the new selected base station (from one of memories 708) and store it in the primary base target generator memory (e.g., memory 704) so that SIR target generator 702 will now work with the new base station data.

In another embodiment, which is similar except that management unit 706 may also perform an update of the data from the active set memory (e.g. one of memories 708) once before putting the data in the SIR target generator memory (e.g., memory 704). This update may be done to reflect the passing time since the data's last update and whatever information available for the management unit at the specific time. For example, channel estimates, old primary base SIR target, etc. may be different and can be updated.

Accordingly, improved wireless communication may be achieved. A base station having better error performance may be selected for transferring communications because the maintained SIR measurements may be used for base station selection. Furthermore, improved communications may be achieved more quickly after transferring communications because the communication state parameters may be used after transferring communications.

The foregoing description of specific embodiments reveals the general nature of the invention sufficiently that others can, by applying current knowledge, readily modify and/or adapt it for various applications without departing from the generic concept. Therefore such adaptations and modifications are within the meaning and range of equivalents of the disclosed embodiments. The phraseology or terminology employed herein is for the purpose of description and not of limitation. Accordingly, the invention embraces all such alternatives, modifications, equivalents and variations as fall within the scope of the appended claims.

## Claims

1. A method of wireless communications comprising:
maintaining communication state parameters for at least some base stations of an active set of base stations (104), the communication state parameters including signal to interference ratio (SIR) target values and carrier frequency estimates for base stations (104) of the active set;
selecting a base station from the active set for transferring (516) communications based on the SIR target values; and
when transferring (516) communications to a base station selected from the active set in which state parameters are maintained, updating the state parameters used for communications with the state parameters maintained for the selected base station.

2. The method of claim 1, the element of maintaining comprising:
maintaining (508) the SIR target values and the carrier frequency estimates for the base stations (404) of the active set during communications (502) with a primary base station; and
when transferring (516) communications to the selected base station includes correcting (518) a carrier frequency for communications with the selected base station using the carrier frequency estimate maintained for the selected base station prior to the generation of an updated carrier frequency estimate for the selected base station, the updated carrier frequency estimate based on despreading of signals received from the selected base station after the transferring.

3. The method of claim 2 further comprising using the SIR target value for the selected base station for communicating with the selected base station after the transferring.

4. The method of claim 3 wherein after transferring (516) communications to a selected base station of the active set, the method further comprises using the SIR target estimate maintained for the selected base station to generate a power control message to send to the selected base station.

5. The method of claim 1 wherein during communications with a primary base station of the active set, the method includes
updating the communication state parameters of the selected base station of the active set after the selected base station is selected for transferring (516) communications; and
refraining from further updating the state parameters of other base stations.

6. The method of claim 1 wherein maintaining the communication state parameters comprises keeping the communication state parameters for base stations (104) of the active set constant during communications with a primary base station, and updating the communication state parameters of a selected base station when the selected base station is selected.

7. The method of claim 1 wherein maintaining the communication state parameters includes updating the communication state parameters for more than one base station of the active set during communications (502) with a primary base station.

8. The method of claim 1 further comprising selecting the base station from the active set for transferring (516) communications additionally based on pilot channel power level measurements for base stations of the active set.

9. The method of claim 1 wherein during communications (502) with a primary base station, the method further comprises:
generating (602) a SIR target for a current downlink channel from measured channel parameters;
generating a SIR estimate for the current downlink channel from measured channel parameters; and
combining the SIR target with the SIR estimate to generate a power control message for transmission to the primary base station,
wherein the current downlink channel is either a code division multiple access (CDMA) downlink channel or wideband CDMA (WBCDMA) downlink channel.

10. The method of claim 9 further comprising correcting the SIR target with a correction factor determined from error rate information, and wherein combining comprises combining the SIR estimate-with the corrected SIR target to generate the power control message.

11. The method of claim 1 wherein the method is performed by a mobile station (102) operating in site selection diversity transmit (SSDT) mode.

12. A wireless communication device (200) comprising:
a memory (410) to store maintained communication state parameters for base stations (104) of an active set, the communication state parameters including signal to interference ration (SIR) target values and carrier frequency estimates for base stations of the active set; and
a receiver to select a base station from the active set for transferring communications based on the SIR target values and to use the communication state parameters for communicating with one of the base stations of the active set selected for transferring communications.

13. The device (200) of claim 12, the receiver comprising:
a carrier frequency estimator (408) to estimate the carrier frequency offset estimates for the base stations (104) of the active set during communications with a primary base station; and
a carrier frequency correction unit (400) to correct a carrier frequency for communications with the selected base station using the carrier frequency estimate maintained for the selected base station when transferring communications to a selected base station of the active set and prior to the generation of an updated carrier frequency estimate by the carrier frequency estimator for the selected base station, wherein the updated carrier frequency estimate is to be based on despreading of signals received from the selected base station after the transferring.

14. The device (200) of claim 12, wherein the receiver includes a SIR target generator (216) to maintain the SIR target values for base stations (104) of the active set, the SIR target value of the selected base station being used for communications with the selected base station after the transferring.

15. The device (200) of claim 12 wherein the receiver further comprises a message generator (228) wherein after transferring communications to a selected base station of the active set, the message generator uses a SIR estimate maintained for the selected base station to generate a power control message to send to the selected base station.

16. The device (200) of claim 12 wherein during communications with a primary base station of the active set, the receiver updates the communication state parameters of the selected base station of the active set after the selected base station is selected for transferring communications, and communicates with the selected base station after transferring communications using the updated communication state parameters.

17. The device (200) of claim 12 wherein the receiver updates the communication state parameters for base stations of the active set once during communications with a primary base station, and updates the communication state parameters a second time for a base station of the active set selected for transferring communications.

18. The device (200) of claim 12 wherein the receiver updates the communication state parameters for more than one base station of the active set during communications with a primary base station.

19. The device (200) of claim 14 wherein the receiver further selects a base station from the active set for transferring communications based on pilot channel power level measurements for the base stations of the active set.

20. The wireless communication device (200) of claim 12, further comprising
a dipole antenna (202) to receive communications from a primary base station; said receiver comprising
a channel estimator (210) to generate channel estimates for a communication channel with the primary base station and generate channel estimates for channels with base stations of the active set of base stations (104);
a signal to interference (SIR) target generator to generate SIR target values for the channel with the primary base station and the channels with the base stations of the active set;
a SIR estimator (224) to generate a SIR estimate based on channel estimates for a current channel; and
a base station selection unit (218) to select a base station from the active set for transferring communications based on the SIR target values,
wherein during communications with the primary base station, the SIR target values are maintained for base stations of the active set, and when transferring communications to one of the other base stations of the active set, the SIR estimate of the other base station is used for communications with the other base station after transferring communications.

21. The device of claim 20 further comprising a carrier frequency correction unit to maintain the carrier frequency estimates for other base stations of the active set during communications with a primary base station, and when transferring communications to one of the other base stations of the active set, to correct a carrier frequency of the other base station using the carrier frequency estimate for the other base station prior to the generation of an updated carrier frequency estimate for the other base station, the updated carrier frequency estimate based on despreading of signals received from the other base station after the transferring.

22. The device of claim 21, the receiver further comprising a message generator (228) to generate a power control message based on the SIR estimate for the current channel and the SIR target value for the current channel.

23. A storage medium having stored thereon instructions, that when executed by a computing platform, result in wireless communications with remote base stations in site selection diversity transmit (SSDT) mode wherein
communication state parameters including signal to interference ratio (SIR) target values and carrier frequency estimates are maintained for base stations of an active set;
a base station from the active set is selected for transferring communication thereto based on the SIR target values; and
the communication state parameters for communicating with the selected base station are used for transferring communications.

24. The storage medium of claim 23, wherein the instructions, when further executed by the digital computing platform, result in:
maintaining the SIR target values and the carrier frequency estimates for the base stations of the active set during communications with a primary base station; and
when transferring communications to a selected base station of the active set, correcting a carrier frequency for communications with the selected base station using the carrier frequency estimate maintained for the selected base station prior to the generation of an updated carrier frequency estimate for the selected base station, the updated carrier frequency estimate based on despreading of signals received from the selected base station after the transferring.

25. The storage medium of claim 24 wherein the instructions, when further executed by the digital computing platform result in using the SIR target value for communications with the selected base station after the transferring.

## Patentansprüche

1. Verfahren für drahtlose Kommunikationen, umfassend:
Führen von Kommunikationszustandparametern für mindestens einige Basisstationen eines aktiven Satzes von Basisstationen (104), wobei die Kommunikationszustandsparameter Signal-Rausch-Verhältnis- Zielwerte und Trägerfrequenzschätzungen für Basisstationen (104) des aktiven Satzes aufweisen,
Auswählen einer Basisstation aus dem aktiven Satz zum Übertragen (516) von Kommunikationen auf der Grundlage von Signal-Rausch-Verhältnis- Zielwerten, und
beim Übertragen (516) von Kommunikationen zu einer Basisstation, die aus dem aktiven Satz, in dem die Zustandsparameter geführt werden, ausgewählt ist, Aktualisieren der Zustandsparameter, die für die Kommunikationen verwendet werden, mit den Zustandparametern, die für die ausgewählte Basisstation geführt werden.

2. Verfahren nach Anspruch 1, wobei das Element des Führens Folgendes aufweist:
Führen (508) der Zielwerte des Signal-Rausch-Verhältnisses und der Trägerfrequenzschätzungen für die Basisstationen (404) des aktiven Satzes während den Kommunikationen (502) mit einer Hauptbasisstation, und
wenn das Übertragen (516) von Kommunikationen zu der ausgewählten Basisstation das Korrigieren (518) einer Trägerfrequenz für Kommunikationen mit der ausgewählten Basisfrequenz unter Einsatz der Trägerfrequenzschätzung, die für die ausgewählte Basisstation geführt wird, aufweist, vor dem Erzeugen einer aktualisierten Trägerfrequenzschätzung für die ausgewählte Basisstation, der aktualisierten Trägerfrequenzschätzung basierend auf dem Entspreizen von Signalen, die von der ausgewählten Basisstation nach dem Übertragen empfangen werden.

3. Verfahren nach Anspruch 2, das ferner den Gebrauch des Signal-Rausch-Verhältnis-Zielwerts für die ausgewählte Basisstation zum Kommunizieren mit der ausgewählten Basisstation nach dem Übertragen aufweist.

4. Verfahren nach Anspruch 3, wobei nach dem Übertragen (516) von Kommunikationen zu einer ausgewählten Basisstation des aktiven Satzes das Verfahren ferner den Gebrauch der Zielschätzung für Signal-Rausch-Verhältnis, die für die ausgewählte Basisstation geführt wird, zum Erzeugen einer Leistungssteuernachricht aufweist, die an die ausgewählte Basisstation zu senden ist.

5. Verfahren nach Anspruch 1, wobei während der Kommunikationen mit einer Hauptbasisstation des aktiven Satzes das Verfahren Folgendes aufweist
Aktualisieren der Kommunikationszustandsparameter der ausgewählten Basisstation des aktiven Satzes nach dem Auswählen der ausgewählten Basisstation zum Übertragen (516) von Kommunikationen, und
Unterlassen weiterer Aktualisierung der Zustandsparameter der anderen Basisstationen.

6. Verfahren nach Anspruch 1, wobei das Führen von Kommunikationszustandsparametern das Konstanthalten der Kommunikationszustandsparameter für Basisstationen (104) des aktiven Satzes während Kommunikationen mit einer Hauptbasisstation aufweist und das Aktualisieren der Kommunikationszustandsparameter einer ausgewählten Basisstation, wenn die ausgewählte Basisstation ausgewählt ist.

7. Verfahren nach Anspruch 1, wobei das Führen von Kommunikationszustandsparametern das Aktualisieren der Kommunikationszustandsparameter für mehr als eine Basisstation des aktiven Satzes während Kommunikationen (502) mit einer Hauptbasisstation aufweist.

8. Verfahren nach Anspruch 1, das ferner das Auswählen der Basisstation aus dem aktiven Satz zum Übertragen (516) von Kommunikationen aufweist, die zusätzlich auf Pilotkanal-Leistungspegelmessungen für Basisstationen des aktiven Satzes beruht.

9. Verfahren nach Anspruch 1, wobei während Kommunikationen (502) mit einer Hauptbasisstation das Verfahren ferner Folgendes aufweist:
Erzeugen (602) eines Signal-Rausch-Verhältnis-Zielwerts für einen aktuellen Abwärtsverbindungskanal aus gemessenen Kanalparametern,
Erzeugen einer Signal-Rausch-Verhältnis-Schätzung für den aktuellen Abwärtsverbindungskanal aus gemessenen Kanalparametern und
Kombinieren des Signal-Rausch-Verhältnis-Zielwerts mit der Signal-Rausch-Verhältnis-Schätzung zum Erzeugen einer Leistungssteuernachricht zum Übertragen an die Hauptbasisstation,
wobei der aktuelle Abwärtsverbindungskanal entweder ein CDMA-Abwärtsverbindungskanal oder Breitband-CDMA (WBCDMA)-Abwärtsverbindungskanal ist.

10. Verfahren nach Anspruch 9, das ferner das Korrigieren des Signal-Rausch-Verhältnis-Zielwerts mit einem Korrekturfaktor aufweist, der ausgehend von Fehlerrateninformation bestimmt wird, und wobei das Kombinieren eine Kombinieren der Signal-Rausch-Verhältnis-Schätzung mit dem korrigiertem Signal-Rausch-Verhältnis-Zielwert aufweist, um die Leistungssteuernachricht zu erzeugen.

11. Verfahren nach Anspruch 1, wobei das Verfahren von einer Mobilstation (102) ausgeführt wird, die im Site Selection Diversity Transmit Modus (SSDT) funktioniert.

12. Drahtlose Kommunikationsvorrichtung (200), Folgendes umfassend:
einen Speicher (410) zum Speichern geführter Kommunikationszustandsparameter für Basisstationen (104) eines aktiven Satzes, wobei die Kommunikationszustandsparameter Zielwerte für ein Signal-Rausch-Verhältnis und Trägerfrequenzschätzungen für Basisstationen des aktiven Satzes enthalten, und
einen Empfänger zum Auswählen einer Basisstation aus dem aktiven Satz zum Übertragen von Kommunikationen auf der Grundlage der Signal-Rausch-Verhältnis-Zielwerte und zum Verwenden der Kommunikationszustandsparameter zum Kommunizieren mit einer der Basisstationen des aktiven Satzes, die zum Übertragen von Kommunikationen ausgewählt wird.

13. Vorrichtung (200) nach Anspruch 12, wobei der Empfänger Folgendes aufweist:
einen Trägerfrequenzschätzer (408) zum Schätzen der Trägerfrequenzschätzungen für die Basisstationen (104) des aktiven Satzes während Kommunikationen mit einer Hauptbasisstation, und
eine Trägerfrequenzkorrektureinheit (400) zum Korrigieren einer Trägerfrequenz für Kommunikationen mit der ausgewählten Basisstation, die die Trägerfrequenzschätzung verwendet, die für die ausgewählte Basisstation beim Übertragen von Kommunikationen zu einer ausgewählten Basisstation des aktiven Satzes geführt wird und vor dem Erzeugen einer aktuellen Trägerfrequenzschätzung durch den Trägerfrequenzschätzer für die ausgewählte Basisstation, wobei die ausgewählte Trägerfrequenzschätzung auf dem Entspreizen von Signalen basieren muss, die von der ausgewählten Basisstation nach dem Übertragen empfangen wurden.

14. Vorrichtung (200) nach Anspruch 12, wobei der Empfänger einen Signal-Rausch-Verhältnis-Generator (216) aufweist, um Signal-Rausch-Verhältnis-Zielwerte für Basisstationen (104) des aktiven Satzes zu führen, wobei der Signal-Rausch-Verhältnis-Zielwert der ausgewählten Basisstation für Kommunikationen mit der ausgewählten Basisstation nach dem Übertragen verwendet wird.

15. Vorrichtung (200) nach Anspruch 12, wobei der Empfänger ferner einen Nachrichtengenerator (228) aufweist, wobei der Nachrichtengenerator nach dem Übertragen von Kommunikationen an eine ausgewählte Basisstation des aktiven Satzes eine Signal-Rausch-Verhältnis-Schätzung verwendet, die für die ausgewählte Basisstation geführt wird, um eine Leistungssteuernachricht zu erzeugen, die an die ausgewählte Basisstation zu senden ist.

16. Vorrichtung (200) nach Anspruch 12, wobei während Kommunikationen mit einer Hauptbasisstation des aktiven Satzes der Empfänger die Kommunikationszustandsparameter der ausgewählten Basisstation des aktiven Satzes aktualisiert, nachdem die ausgewählte Basisstation zum Übertragen von Kommunikationen ausgewählt wurde, und mit der ausgewählten Basisstation nach dem Übertragen von Kommunikationen unter Einsatz der aktualisierten Kommunikationszustandsparameter kommuniziert.

17. Vorrichtung (200) nach Anspruch 12, wobei der Empfänger die Kommunikationszustandsparameter für Basisstationen des aktiven Satzes ein Mal während Kommunikationen mit einer Hauptbasisstation aktualisiert und die Kommunikationszustandsparameter ein zweites Mal für eine Basisstation des aktiven Satzes, die zum Übertragen von Kommunikationen ausgewählt wird, aktualisiert.

18. Vorrichtung (200) nach Anspruch 12, wobei der Empfänger die Kommunikationszustandsparameter für mehr als eine Basisstation des aktiven Satzes während Kommunikationen mit einer Hauptbasisstation aktualisiert.

19. Vorrichtung (200) nach Anspruch 14, wobei der Empfänger ferner eine Basisstation aus dem aktiven Satz auswählt, um Kommunikationen zu übertragen, die auf Pilotkanal-Leistungspegelmessungen für Basisstationen des aktiven Satzes beruhen.

20. Drahtlose Kommunikationsvorrichtung (200) nach Anspruch 12, die ferner Folgendes aufweist:
eine Dipolantenne (202) zum Empfangen von Kommunikationen von einer Hauptbasisstation, wobei der Empfänger Folgendes aufweist
einen Kanalschätzer (210) zum Erzeugen von Kanalschätzungen für einen Kommunikationskanal mit der Hauptbasisstation und Erzeugen von Kanalschätzungen für Kanäle mit Basisstationen des aktiven Satzes von Basisstationen (104),
einen Signal-Rausch-Verhältnis-Zielwertgenerator zum Erzeugen von Signal-Rausch-Verhältnis-Zielwerten für den Kanal mit der Hauptbasisstation und den Kanälen mit den Basisstationen des aktiven Satzes,
einen Signal-Rausch-Verhältnis-Schätzer (224) zum Erzeugen einer Signal-Rausch-Verhältnis-Schätzung beruhend auf Kanalschätzungen für einen aktuellen Kanal, und
eine Basisstationsauswähleinheit (218) zum Auswählen einer Basisstation aus dem aktiven Satz zum Übertragen von Kommunikationen basierend auf den Signal-Rausch-Verhältnis-Zielwerten,
wobei während Kommunikationen mit der Hauptbasisstation die Signal-Rausch-Verhältnis-Zielwerte für Basisstationen des aktiven Satzes geführt werden, und beim Übertragen von Kommunikationen zu einer der anderen Basisstationen des aktiven Satzes die Signal-Rausch-Verhältnis-Schätzung der anderen Basisstation für Kommunikationen mit der anderen Basisstation nach dem Übertragen von Kommunikationen verwendet wird.

21. Vorrichtung nach Anspruch 20, die ferner eine Trägerfrequenzkorrektureinheit aufweist, um die Trägerfrequenzschätzungen für andere Basisstationen des aktiven Satzes während Kommunikationen mit einer Hauptbasisstation zu führen, und beim Übertragen von Kommunikationen zu einer der anderen Basisstationen des aktiven Satzes, eine Trägerfrequenz der anderen Basisstation zu korrigieren, indem die Trägerfrequenzschätzung für die andere Basisstation vor dem Erzeugen einer aktualisierten Trägerfrequenzschätzung für die andere Basisstation erzeugt wird, wobei die aktualisierte Trägerfrequenzschätzung auf dem Entspreizen von Signalen beruht, die von der anderen Basisstation nach dem Übertragen empfangen werden.

22. Vorrichtung nach Anspruch 21, wobei der Empfänger ferner einen Nachrichtengenerator (228) aufweist, um eine Leistungssteuernachricht basierend auf der Signal-Rausch-Verhältnis-Schätzung für den aktuellen Kanal und den Signal-Rausch-Verhältnis-Zielwert für den aktuellen Kanal zu erzeugen.

23. Speicherträger, auf dem Anweisungen gespeichert sind, die, wenn sie von einer Rechenplattform ausgeführt werden, in drahtlosen Kommunikationen mit dezentralen Basisstationen im Site Selection Diversity Transmit Modus (SSDT) resultieren, wobei
Kommunikationszustandsparameter, darunter Signal-Rauschverhältnis (SIR)-Zielwerte und Trägerfrequenzschätzungen für Basisstationen eines aktiven Satzes geführt werden,
eine Basisstation des aktiven Satzes ausgewählt wird, um an sie Kommunikation basierend auf den Signal-Rausch-Verhältnis-Zielwerten zu übertragen,
die Kommunikationszustandsparameter zum Kommunizieren mit der ausgewählten Basisstation zum Übertragen von Kommunikationen verwendet werden.

24. Speicherträger nach Anspruch 23, wobei die Anweisungen, wenn sie ferner von der digitalen Rechenplattform ausgeführt werden, in Folgendem resultieren:
Führen der Signal-Rausch-Verhältnis-Zielwerte und Trägerfrequenzschätzungen für die Basisstationen des aktiven Satzes während Kommunikationen mit einer Hauptbasisstation und
beim Übertragen von Kommunikationen an eine ausgewählte Basisstation des aktiven Satzes, Korrigieren einer Trägerfrequenz für Kommunikationen mit der ausgewählten Basisstation unter Einsatz der Trägerfrequenzschätzung, die für die ausgewählte Basisstation geführt wird, vor dem Erzeugen einer aktualisierten Trägerfrequenzschätzung für die ausgewählte Basisstation, wobei die aktualisierte Trägerfrequenzschätzung auf dem Entspreizen von Signalen beruht, die von der ausgewählten Basisstation nach dem Übertragen empfangen werden.

25. Speicherträger nach Anspruch 24, wobei die Anweisungen, wenn sie ferner von der digitalen Rechenplattform ausgeführt werden, im Gebrauch des Signal-Rausch-Verhältnis-Zielwerts für Kommunikationen mit der ausgewählten Basisstation nach dem Übertragen resultieren.

## Revendications

1. Procédé de communications sans fil comprenant :
le maintien de paramètres d'état de communication pour au moins certaines stations de base d'un ensemble actif de stations de base (104), les paramètres d'état de communication comprenant des valeurs cibles de rapport signal utile/signal brouilleur (SIR) et des estimations de fréquence porteuse pour des stations de base (104) de l'ensemble actif ;
la sélection d'une station de base dans l'ensemble actif pour le transfert (516) de communications basées sur les valeurs cibles SIR ; et
lors du transfert (516) de communications vers une station de base sélectionnée dans l'ensemble actif dans lequel les paramètres d'état sont maintenus, la mise à jour des paramètres d'état utilisés pour des communications avec les paramètres d'état maintenus pour la station de base sélectionnée.

2. Procédé selon la revendication 1, l'élément de maintien comprenant :
le maintien (508) des valeurs cibles SIR et des estimations de fréquence porteuse pour les stations de base (404) de l'ensemble actif lors de communications (502) avec une station de base principale ; et
lors du transfert (516) de communications vers la station de base sélectionnée comprend la correction (518) d'une fréquence porteuse pour des communications avec la station de base sélectionnée à l'aide de l'estimation de fréquence porteuse maintenue pour la station de base sélectionnée avant la génération d'une estimation de fréquence porteuse mise à jour pour la station de base sélectionnée, l'estimation de fréquence porteuse mise à jour basée sur la diffusion de signaux reçus de la station de base sélectionnée après le transfert.

3. Procédé selon la revendication 2, comprenant en outre l'utilisation de la valeur cible SIR pour la station de base sélectionnée pour une communication avec la station de base sélectionnée après le transfert.

4. Procédé selon la revendication 3, dans lequel après le transfert (516) de communications vers une station de base sélectionnée de l'ensemble actif, le procédé comprend en outre l'utilisation de l'estimation de cible SIR maintenue pour la station de base sélectionnée afin de générer un message de réglage de puissance à envoyer à la station de base sélectionnée.

5. Procédé selon la revendication 1, dans lequel lors de communications avec une station de base principale de l'ensemble actif, le procédé comprend :
la mise à jour des paramètres d'état de communication de la station de base sélectionnée de l'ensemble actif après que la station de base sélectionnée a été sélectionnée pour le transfert (516) de communications ; et
l'empêchement de mise à jour des paramètres d'état des autres stations de base.

6. Procédé selon la revendication 1, dans lequel le maintien des paramètres d'état de communication comprend le maintien constant des paramètres d'état de communication des stations de base (104) de l'ensemble actif lors de communications avec une station de base principale, et la mise à jour des paramètres d'état de communication d'une station de base sélectionnée lorsque la station de base sélectionnée est sélectionnée.

7. Procédé selon la revendication 1, dans lequel le maintien des paramètres d'état de communication comprend la mise à jour des paramètres d'état de communication de plusieurs stations de base de l'ensemble actif lors de communications (502) avec une station de base principale.

8. Procédé selon la revendication 1, comprenant en outre la sélection de la station de base dans l'ensemble actif pour le transfert (516) de communications basées également sur des mesures du niveau de puissance du canal pilote pour des stations de base de l'ensemble actif.

9. Procédé selon la revendication 1, dans lequel lors de communications (502) avec une station de base principale, le procédé comprend en outre :
la génération (602) d'une cible SIR pour un canal de liaison descendante de courant à partir de paramètres de canal mesurés ;
la génération d'une estimation SIR pour le canal de liaison descendante de courant à partir des paramètres de canal mesurés ; et
la combinaison de la cible SIR avec l'estimation SIR afin de générer un message de réglage de puissance pour la transmission à la station de base principale,
dans lequel le canal de liaison descendante de courant est soit un canal de liaison descendante à accès multiple par répartition en code (CDMA) ou un canal de liaison descendante à accès multiple par répartition en code à large bande (WBCDMA).

10. Procédé selon la revendication 9, comprenant en outre la correction de la valeur cible SIR selon un facteur de correction déterminé à partir d'informations sur le taux d'erreur, et dans lequel la combinaison comprend la combinaison de l'estimation SIR avec la cible SIR corrigée afin de générer le message de réglage de puissance.

11. Procédé selon la revendication 1, dans lequel le procédé est exécuté par une station mobile (102) fonctionnant en mode de transmission à diversité de sélection d'emplacement (SSDT).

12. Dispositif de communication sans fil (200) comprenant :
une mémoire (410) pour stocker des paramètres d'état de communication maintenus pour des stations de base (104) d'un ensemble actif, les paramètres d'état de communication comprenant des valeurs cibles de rapport signal utile/signal brouilleur (SIR) et des estimations de fréquence porteuse pour des stations de base de l'ensemble actif ; et
un récepteur pour sélectionner une station de base dans l'ensemble actif pour le transfert de communications basé sur les valeurs cibles SIR et pour utiliser les paramètres d'état de communication afin de communiquer avec l'une des stations de base de l'ensemble actif sélectionnée pour le transfert de communications.

13. Dispositif (200) selon la revendication 12, le récepteur comprenant :
un dispositif d'estimation de fréquence porteuse (408) pour évaluer les estimations de fréquence porteuse des stations de base (104) de l'ensemble actif lors de communications avec une station de base principale ; et
une unité de correction de fréquence porteuse (400) pour corriger une fréquence porteuse pour des communications avec la station de base sélectionnée à l'aide de l'estimation de fréquence porteuse maintenue pour la station de base sélectionnée lors du transfert de communications vers une station de base sélectionnée de l'ensemble actif et avant la génération d'une estimation de fréquence porteuse mise à jour par le dispositif d'estimation de fréquence porteuse pour la station de base sélectionnée, dans laquelle l'estimation de fréquence porteuse mise à jour doit être basée sur la diffusion de signaux reçus de la station de base sélectionnée après le transfert.

14. Dispositif (200) selon la revendication 12, dans lequel le récepteur comprend un dispositif de génération de cible SIR (216) afin de maintenir les valeurs cibles SIR pour des stations de base (104) de l'ensemble actif, la valeur cible SIR de la station de base sélectionnée étant utilisée pour des communications avec la station de base sélectionnée après le transfert.

15. Dispositif (200) selon la revendication 12, dans lequel le récepteur comprend en outre un dispositif de génération de message (228) dans lequel après le transfert de communications vers une station de base sélectionnée de l'ensemble actif, le dispositif de génération de message utilise une estimation SIR maintenue pour la station de base sélectionnée afin de générer un message de réglage de puissance à envoyer à la station de base sélectionnée.

16. Dispositif (200) selon la revendication 12, dans lequel lors de communications avec une station de base principale de l'ensemble actif, le récepteur met à jour les paramètres d'état de communication de la station de base sélectionnée de l'ensemble actif après que la station de base sélectionnée a été sélectionnée pour le transfert de communications, et communique avec la station de base sélectionnée après le transfert de communications en utilisant les paramètres d'état de communication mis à jour.

17. Dispositif (200) selon la revendication 12, dans lequel le récepteur met à jour les paramètres d'état de communication pour des stations de base de l'ensemble actif une fois lors de communications avec une station de base principale, et met à jour les paramètres d'état de communication une seconde fois pour une station de base de l'ensemble actif sélectionnée pour le transfert de communications.

18. Dispositif (200) selon la revendication 12, dans lequel le récepteur met à jour les paramètres d'état de communication de plusieurs stations de base de l'ensemble actif lors de communications avec une station de base principale.

19. Dispositif (200) selon la revendication 14, dans lequel le récepteur sélectionne en outre une station de base dans l'ensemble actif pour le transfert de communications basé sur des mesures du niveau de puissance du canal pilote pour les stations de base de l'ensemble actif.

20. Dispositif de communication sans fil (200) selon la revendication 12, comprenant en outre:
un doublet (202) pour recevoir des communications d'une station de base principale ; ledit récepteur comprenant ;
un dispositif d'estimation de canal (210) pour générer des estimations de canal pour un canal de communication avec la station de base principale et pour générer des estimations de canal pour des canaux avec des stations de base de l'ensemble actif de stations de base (104) ;
un dispositif de génération de cible de rapport signal utile/signal brouilleur (SIR) pour générer des valeurs cibles SIR pour le canal avec la station de base principale et les canaux avec les stations de base de l'ensemble actif ;
un dispositif d'estimation SIR (224) pour générer une estimation SIR basée sur des estimations de canal pour un canal courant; et
une unité de sélection de station de base (218) pour sélectionner une station de base dans l'ensemble actif pour un transfert de communications basé sur les valeurs cibles SIR,
dans lequel lors de communications avec la station de base principale, les valeurs cibles SIR sont maintenues pour des stations de base de l'ensemble actif, et lors du transfert de communications vers l'une des autres stations de base de l'ensemble actif, l'estimation SIR de l'autre station de base est utilisée pour des communications avec l'autre station de base après le transfert de communications.

21. Dispositif selon la revendication 20, comprenant en outre une unité de correction de fréquence porteuse pour maintenir les estimations de fréquence porteuse des autres stations de base de l'ensemble actif lors de communications avec une station de base principale, et lors du transfert de communications avec l'une des autres stations de base de l'ensemble actif, pour corriger une fréquence porteuse de l'autre station de base en utilisant l'estimation de fréquence porteuse de l'autre station de base avant la génération d'une estimation de fréquence porteuse mise à jour pour l'autre station de base, l'estimation de fréquence porteuse mise à jour étant basée sur la diffusion de signaux reçus de l'autre station de base après le transfert.

22. Dispositif selon la revendication 21, le récepteur comprenant en outre un dispositif de génération de message (228) pour générer un message de réglage de puissance basé sur l'estimation SIR pour le canal courant et sur la valeur cible SIR pour le canal courant.

23. Support de stockage selon lequel sont stockées des instructions, qui lorsqu'elles sont exécutées par une plate-forme de calcul, entraînent des communications sans fil avec des stations de base à distance en mode de transmission à diversité de sélection d'emplacement (SSDT) dans lequel
des paramètres d'état de communication comprenant des valeurs cibles de rapport signal utile/signal brouilleur (SIR) et des estimations de fréquence porteuse sont maintenues pour des stations de base d'un ensemble actif ;
une station de base dans l'ensemble actif est sélectionnée pour le transfert d'une communication vers celle-ci basé sur les valeurs cibles SIR ; et
les paramètres d'état de communication pour communiquer avec la station de base sélectionnée sont utilisés pour le transfert de communications.

24. Support de stockage selon la revendication 23, dans lequel les instructions, lorsqu'elles sont en outre exécutées par la plate-forme de calcul numérique, entraînent :
le maintien des valeurs cibles SIR et des estimations de fréquence porteuse sont maintenues pour les stations de base de l'ensemble actif lors de communications avec une station de base principale ; et
lors du transfert de communications vers une station de base sélectionnée de l'ensemble actif, la correction d'une fréquence porteuse pour des communications avec la station de base sélectionnée en utilisant l'estimation de fréquence porteuse maintenue pour la station de base sélectionnée avant la génération d'une estimation de fréquence porteuse mise à jour pour la station de base sélectionnée, l'estimation de fréquence porteuse mise à jour étant basée sur la diffusion de signaux reçus de la station de base sélectionnée après le transfert.

25. Support de stockage selon la revendication 24, dans lequel les instructions, lorsqu'elles sont en outre exécutées par la plate-forme de calcul numérique, entraînent l'utilisation de la valeur cible SIR pour des communications avec la station de base sélectionnée après le transfert.
